# EUROPEAN PATENT APPLICATION

(11) **EP 2 293 525 A1**
(43) Date of publication of application: **09.03.2011**
(21) Application number: 09305807.1
(22) Date of filing: 02.09.2009
(51) Int. Cl.: H04L 29/12, H04L 29/08, H04W 76/02

(54) **Method for a secure device to resolve an IP address of a target server**

(71) Applicant: Gemalto SA, 92190 Meudon (FR)
(72) Inventor: Nishi, Kenji, 92190 Meudon (FR)

(57) **Abstract**

The present invention relates to a method for a secure device to resolve an IP address of a target server to which the secure device is willing to access, said secure device being suitable to be inserted in a wireless device, wherein the secure device sends a request to a DNS client that resides on said wireless device to resolve the IP address of the target server, said target server being identified by its FQDN.

## Description

The invention relates to the field of wireless telecommunications.
The invention especially deals with a method for a secure device to resolve an IP address of a target server to which the secure device is willing to access.

In order to for a secure device such as a UICC (Universal Integrated Circuit Card) that is also called smart card, to initiate an IP connection with a server located somewhere in the Internet, the secure device first needs to know the IP address of the target server.

The IP address can be dynamically allocated and changing over time. Thus, the secure device needs to resolve the IP address based on known information such as the FQDN (fully qualified domain name) of the server. A DNS client, with support from the DNS servers if needed, can resolve the IP address.

Then unless the secure device supports a DNS client inside, the secure device needs to request the DNS client that resides on a wireless device such as a Mobile Equipment (ME) to resolve the IP address.

A main problem is that the DNS resolver resides on the wireless device and there is no standard way for the secure device to request the DNS resolver to resolve the IP address of an OTA (Over-The-Air) server. There is no standard way for the secure device to request the DNS client inside the wireless device to resolve the IP address of the target server.

The current ETSI or 3GPP standards for example do not provide a mean for an UICC to request the DNS client that resides on a Mobile Equipment (ME) to resolve the IP address of a server, to which the UICC is willing to access. And the current standards assume that the IP address of the server is known by the UICC in advance. This prevents the UICC from initiating IP session with the server located somewhere in the internet, especially when the IP address of the server is dynamically changing, because the UICC cannot resolve the IP address of the target server.

For an OTA server IP address to be resolved on a device which can be either the ME or the UICC, one known solution is to put a DNS resolver functionality in the UICC. If the UICC needs to resolve the IP address, the UICC then needs to talk to the DNS server. To do so, the UICC needs to know the DNS server IP address, which the ME receives from the network at the time of network attachment. Nevertheless, the UICC can not get this DNS server IP address.

One method then consists in relying on Device Management protocol. In the OMA (Open Mobile Alliance) Device Management protocol, the UICC comprises a DM server which can diagnose the ME configuration. This allows the DM server to get the DNS IP address stored in the ME. By having a DM server functionality inside the UICC, the UICC can get the DNS IP address from the ME using for example a BIP (Bear Independent protocol) UICC server mode. Once the DNS IP address is obtained, the UICC will do the other steps in a BIP UICC client mode. BIP UICC server mode and client mode are well known. BIP UICC server mode corresponds to Smart Card Web Server. Mainly, in BIP, there are two modes, either UICC server or UICC client. Here, as DM server in the UICC is used, it requires BIP server mode only at this step. Nevertheless, one main drawback of this method is the availability of the DM server, which requiring BIP UICC server mode and is not well deployed in the market as of today.

There is then still a need to provide a method for a smart card to resolve an IP address of a target server to which the UICC is willing to access.

It is an object of the invention to provide a method for a secure device to resolve an IP address of a target server to which the secure device is willing to access, said secure device being suitable to be inserted in a wireless device, wherein the secure device sends a request to a DNS client that resides on said wireless device to resolve the IP address of the target server, said target server being identified by its FQDN.

According to other aspects of the invention,
- the request may comprise a proactive command;
- the DNS client may resolve the IP address by itself;
- the DNS client may connect to a DNS server for resolving the IP address of the target server, then the DNS server returns back the resolved IP address to the DNS client that resides on the wireless device;
- the DNS client may return back the resolved IP address of the target server to the secure device;
- the secure device may initiate a Bear Independent Protocol session with the target server using the resolved address;
- the DNS client may open a BIP channel with the target server;
- the method may comprise using a smart card as secure device.

The secure device can advantageously initiate an IP session with a server, whose IP address is dynamically assigned and can be resolved by the DNS client (with the support from the DNS servers if needed) on the wireless device.

Thanks to this method, a secure device is able to request an IP session with servers using Bear Independent protocol defined in ETSI TS 102 223.

It is a further object of the invention to provide a mobile equipment comprising a secure device and having a DNS client inside, said secure device resolving an IP address of a target server to which it is willing to access by using the method.

The invention is now described, by way of example, with reference to the accompanying drawings.

In order that the manner in which the above recited and other advantages and features of the invention are obtained, a more particular description of the invention briefly described above will be rendered by reference.

Notwithstanding any other forms that may fall within the scope of the present invention, preferred forms of the invention will now be described, by way of example only, with reference to the accompanying drawing in which:
**FIG.1** schematically shows a diagram of a method according to the present invention, in which the resolved IP address is returned back to a secure device.
**FIG.2** schematically shows a diagram of the method according to another embodiment in which the resolved IP address is not returned to the secure device.

The present invention may be understood according to the detailed description provided herein.

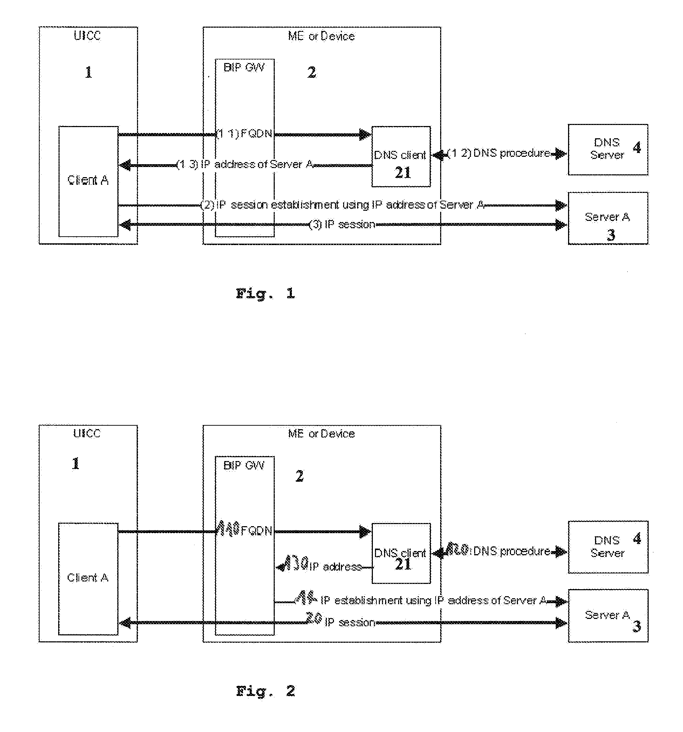

Shown in Fig.1 is a method according to an embodiment of the present invention. The method comprises different steps allowing a secure device such as an UICC 1 to have a dialogue with a DNS client 21 that resides on a wireless device such as a ME 2 in order to obtain a resolved IP address of a target server 3, to which the UICC 1 is willing to connect. In the following description, the target server 3 is called Server A.

For doing so, the UICC requests the DNS client 21 that resides on the ME 2 to resolve the IP address. The request can be in a form of a proactive command which can be for example either extension of existing proactive command already defined in ETSI TS 102 223 or a new proactive command. In response to this proactive command, the DNS client 21 in the ME will return the resolved IP address of the target server 3.

More precisely, the method comprises a step 11 in which the UICC 1 requests the DNS client 21 that resides in the ME 2 to resolve the IP address of the server identified by its FQDN. A request may be an existing proactive command which can be for example the existing PROVIDE LOCAL INFORMANTION command or the existing OPEN CHANNEL command. In a proactive command, it is possible to set some of parameters. The current standard does not allow setting the FQDN as one of the parameters. An extension is to allow those proactive commands to have the FQDN of the target server as one of its parameters.

The DNS client 21 that resides on the ME 2 tries first to resolve the IP address by itself, i.e. by searching on its own database locally stored, for example in a cache.

If the DNS client in the ME 2 manages to find or to resolve the IP address locally, it does not need to connect to a known DNS server 4. Otherwise, in another step 12, the DNS client 21 connects to the DNS Server 4 and the DNS server 4 returns back the resolved IP address of the target server 3.

In a following step 13, the DNS client 21 that resides on the ME 2 returns back to the UICC 1 the resolved IP address of the Server A 3. By following this procedure, the UICC 1 can get the IP address of the target server 3 and then initiate in a step 20 a Bear Independent Protocol session for example according to ETSI TS 102 223 with the target server using this resolved IP address. In this step 20, a proactive command is OPEN CHANNEL with the IP address of Server A set as one of parameters of this proactive command.

With this embodiment, the UICC is then implicated in two main steps which are to obtain the resolved IP address first and to establish an IP session with the Server A. The resolved IP address is returned back to the UICC 1.

This option is effective especially when it is desired to provide an UICC 1 with a possibility to do selection of IP address out of several addresses that DNS server returns and are received in the response to this proactive command. It can be the case for example, if the DNS server returns two IP address (a primary address and a secondary address) to one IP address resolution request. If the two IP addresses are returned back to the UICC 1, the UICC 1 may be free to use one of them when setting up a connection. This could be useful if an operator let the UICC 1 manage load-balancing between primary and secondary servers.

Shown in Fig.2 is another embodiment of the method when the UICC provides FQDN of the target server.

In this embodiment, the method provides a mean to request the ME 2 to open IP session. The method to request the ME 2 to open IP session when the UICC 1 provides FQDN for the target server can be in a form of an extension of existing OPEN CHANNEL command, which is initiating Bear Independent Protocol.

More precisely, the method comprises a step 110 in which the UICC 1 requests the DNS client 21 that resides in the ME 2 to resolve the IP address of the server identified by its FQDN. As just described above an existing proactive command can be for example the existing OPEN CHANNEL command with FQDN set as one of one of parameters of the proactive command. The existing OPEN CHANNEL command allows advantageously to open a BIP channel and to establish an IP session.

The DNS client 21 that resides on the ME 2 tries first to resolve the IP address by itself, i.e. by searching on its own database locally stored. If the DNS client 21 in the ME 2 manages to find or to resolve the IP address locally, it does not need to connect to the DNS server. Otherwise, in another step 120, the DNS client 21 connects to a known DNS Server 4 and the DNS server 4 returns back the resolved IP address of the target server 3.

In a following step 130, the DNS client 21 that resides on the ME 2 does not returns back to the UICC 1 the resolved IP address of the Server A 3. The DNS client 21 opens a BIP Channel with the target server with setting the resolved IP address.

By providing a possibility to set FQDN in the OPEN CHANNEL, the ME 2 resolves the IP address and opens an IP session with the target server 3. In this case, the UICC 1 receives only a notification from the ME 2 once this IP session is established.

In this embodiment, the UICC 1 only provides FQDN and is implicated in only one main step of establishing the IP connection with Server A 3. The IP address returned from the DNS server 21 is not returned to the UICC 1.

The embodiment as shown in Fig.2 provides advantageously the simplest solution for an UICC 1 because the only thing UICC 1 needs to do is to provide the FQDN of the target server. Then, the other steps are handled by the DNS client 21 in the ME 2 and the UICC 2 gets a connection to the server 3 established without any further action.

These two embodiments both rely on the DNS client 21 in the ME 2.

The method according to the embodiment as shown if Fig.1 has an advantage when an Operator wants the UICC 1 to do some selection or manipulation between primary and secondary IP addresses.

The method according to the embodiment as shown in Fig.2 has an advantage when an Operator wants to have the simplest solution fully relying on DNS client 21 in the ME 2.

Thanks to the invention, the UICC 1 can initiate an IP session with a server, whose IP address is dynamically assigned and can be resolved by a DNS client 21 (with support from DNS servers if needed) that resides on a ME 2.

## Claims

1. Method for a secure device to resolve an IP address of a target server to which the secure device is willing to access, said secure device being suitable to be inserted in a wireless device, wherein the secure device sends a request to a DNS client that resides on said wireless device to resolve the IP address of the target server, said target server being identified by its FQDN.

2. Method according to claim 1, wherein the request comprises a proactive command.

3. Method according to claim 1 to 2, wherein the DNS client resolves the IP address by itself.

4. Method according to claim 1 to 2, wherein the DNS client connects to a DNS server for resolving the IP address of the target server, then the DNS server returns back the resolved IP address to the DNS client that resides on the wireless device.

5. Method according to claim 3 or 4, wherein the DNS client returns back the resolved IP address of the target server to the secure device.

6. Method according to claim 5, wherein the secure device initiates a Bear Independent Protocol session with the target server using the resolved address.

7. Method according to claim 3 or 4, wherein the DNS client opens a BIP channel with the target server.

8. Method according to one of the preceding claims, wherein it comprises using a smart card as secure device.

9. Mobile equipment comprising a secure device and having a DNS client inside, said secure device resolving an IP address of a target server to which it is willing to access by using the method according to one of the preceding claims.
